(19) Europäisches Patentamt / European Patent Office / Office européen des brevets

(11) **EP 3 476 679 B1**

(12) **EUROPEAN PATENT SPECIFICATION**

(45) Date of publication and mention
of the grant of the patent:
**08.07.2020 Bulletin 2020/28**

(21) Application number: **18202694.8**

(22) Date of filing: **25.10.2018**

(51) Int Cl.:
***B60T 17/22*** *(2006.01)*

(54) **METHOD AND DEVICE FOR CHECKING BRAKING INSTALLATIONS OF A COMBINED TRAIN SET**

VERFAHREN UND VORRICHTUNG ZUR ÜBERPRÜFUNG DER BREMSANLAGEN EINES KOMBINIERTEN ZUGVERBANDES

PROCÉDÉ ET DISPOSITIF POUR VÉRIFIER DES INSTALLATIONS DE FREINAGE D'UN ENSEMBLE DE TRAIN COMBINÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2017 BE 201705763**

(43) Date of publication of application:
**01.05.2019 Bulletin 2019/18**

(73) Proprietor: **Bevolve bvba**
**9470 Denderleeuw (BE)**

(72) Inventor: **Vernaillen, Ken**
**9470 Denderleeuw (BE)**

(74) Representative: **Brantsandpatents bvba**
**Pauline Van Pottelsberghelaan 24**
**9051 Ghent (BE)**

(56) References cited:
**EP-A1- 2 805 859      DE-A1- 3 704 826**
**US-A- 4 847 770**

## Description

### TECHNICAL FIELD

The invention relates to a method for checking a braking system of a railway vehicle, wherein the railway vehicle comprises a plurality of brake reservoirs for controlling braking elements on the basis of an internal pressure in the brake reservoir, controlled by one or more central brake lines. In addition, the invention relates to a device for checking braking systems of railway vehicles, and the use of the device for this purpose.

### PRIOR ART

When a train set is put into operation, a very highly controlled test must be carried out on the braking systems, and this at regular intervals, wherein the operation of the brake assemblies on each car must be checked.

Typically, this check happened in the past by sending an inspector to the train sets to check the brakes one by one. For this purpose, the one or more central brake lines (usually there is only one central brake line), which control the brake reservoirs of the individual brake assemblies, must be connected to a compressed air unit that can supply them with air and check and adjust the air pressure in the brake lines. These compressed air units are usually either fixed compressed air units that are present along the tracks (compressors supplied with air by underground pipes), or by sending a locomotive that can supply the brake lines of the train sets with air. The second option, however, is not particularly interesting because a locomotive with driver has to be sent to carry out a check, and they often cannot just be sent out for this (expensive and inefficient time allocation of assets).

The check that followed comprises first the filling of the brake lines by the inspector with the compressed air unit, then waiting until the pressure has stabilised, followed by a leakage test to see whether a (too large) pressure loss occurs over time. Then the brake lines are bled, and therefore also the brake reservoirs, as a result of which the brakes are supposed to engage. The inspector will then make a round of the train set, and check whether each of the brakes of the train set are engaged, and then return to the compressed air unit. Once there, the brake lines are re-pressurised to a level where the brakes should open or disengage. Then the inspector will again make a round and again check whether each of the brakes are indeed disengaged at said higher pressure, and then return to the compressed air unit. In general it can safely be said that this process is very cumbersome and a great waste of time for the inspector.

US 4847770 and EP 2805859 describe mobile compressed air units that can be used for checking the braking systems of train sets. However, these installations in no way solve the problem described, since they still have to be fully controlled by an operator.

The patent documents US 4,847,770 and EP 2,805,859 describe mobile compressed air units that are used for testing brake lines of railway vehicles, but only describe a vague testing method, that is furthermore not suitable for reviewing all characteristics of the brakes, and also fail to allow a streamlined and semi-automatic process.

The present invention aims to solve at least some of the problems mentioned above.

There is a need for an improved method for checking braking systems of a train set (and general railway vehicles). The applicant intends to achieve this by, among other things, providing a device for this purpose.

### BRIEF SUMMARY OF THE INVENTION

The invention relates to an improved method for checking a braking system of a railway vehicle, wherein the railway vehicle comprises a plurality of brake reservoirs for controlling braking elements on the basis of an internal pressure in the brake reservoir, and wherein the internal pressure in the brake reservoirs is controlled by one or more central brake lines, the method comprising the following steps:

 a. connecting the one or more central brake lines to a fixed or mobile compressed air unit;
 b. applying a predetermined pressure regime for checking from the fixed or mobile compressed air unit on the one or more central brake lines, wherein the regime follows a course;
 c. checking that the braking elements of the railway vehicle are engaged;
 d. controlling the central brake lines to obtain a pressure level at which the brake reservoirs disengage the braking elements;
 e. checking that the braking elements of the railway vehicle are disengaged;

wherein a pressure-regulating system is provided between the one or more central brake lines and the fixed or mobile compressed air unit, wherein the pressure-regulating system is adapted for monitoring the pressure from the fixed or mobile compressed air unit in the central brake lines and for exercising the predetermined regime of pressure, and wherein the central brake lines are controlled via the pressure-regulating system for obtaining the pressure level at which the brake reservoirs disengage the braking elements.

In a preferred embodiment, in each phase of the predetermined pressure regime where the mobile compressed air unit fills the brake lines (i.e. increasing the pressure), the effective pressure in the brake lines during filling is measured. In case of a deviation at a certain moment (and/or over a certain time period to avoid errors in measurement) above a predefined percentage in view of the desired pressure at said moment (and/or over the certain time period), this indicates a leak or other problems, causing the procedure to be stopped and an alarm to be raised.

In a preferred embodiment, in each phase of the predetermined pressure regime where the mobile compressed air unit empties the brake lines (i.e. reducing pressure), the effective pressure in the brake lines is measured. In case of a deviation at a certain moment (and/or over a certain time period to avoid errors in measurement) above a predefined percentage in view of the desired pressure at said moment (and/or over the certain time period), this indicates a leak or other problems, causing the procedure to be stopped and an alarm to be raised. Most preferably, both of the above embodiment are employed.

In one possible embodiment, the steps of checking whether the braking elements of the railway vehicle are engaged and/or disengaged are carried out manually / on the spot. In an alternative embodiment, this is performed remotely.

The applicant noted that the known methods for performing a check on the braking systems, an absolute requirement for safety, are performed in a particularly inefficient manner, both in terms of manpower needed and in terms of time required. This becomes clear from the general idea of the braking system of a train.

In general, it should be considered that a train (not necessarily comprising a locomotive) with a plurality of separate sets (wagons, for example) is arranged along a track. Each set comprises a number of braking elements that can engage and disengage. The engaging and disengaging is controlled by the internal pressure in a brake reservoir of the set; at high pressure (above a brake pressure) the brakes are disengaged, at low pressure (below the brake pressure) the brakes are engaged (can in principle also be vice versa, but for safety reasons, this 'passive' engaging is typically chosen). The brake reservoirs are connected to a central brake line (typically one running along the train), which controls the internal pressure in the brake reservoirs. A fixed compressed air unit is available here. An inspector can connect it to the central brake line in order to create the desired pressures during the inspection. Alternatively, instead of the compressed air unit, a locomotive can also be used (also to be regarded as a mobile compressed air unit) in order to thus provide the central brake lines(s) with air. First, a number of checks must be carried out of the pressure achieved, with a stabilisation period and a leakage test, by using the compressed air unit. The pressure is then set in such a way that the braking elements should engage, after which the inspector must make a complete round of the train and check all brakes manually / on the spot as to whether they are indeed engaged. Typically making a round of the entire train concerns a considerable distance. After returning, the pressure is adjusted in such a way that the braking elements should disengage, after which the inspector makes a second round and checks the braking elements manually / on the spot to see whether they have been disengaged. Upon returning, the central brake line is disconnected again (in most cases) and the inspector can check another train.

The step of manually checking is particularly time-consuming, since most situations involve a train that is easily over 100 m long. Having to travel the entire length and back is indeed a great waste of time. To this end, the applicant provides an improved method, in which a pressure-regulating system is connected between the compressed air unit and the central brake line, which automatically performs the necessary pressure tests on the one hand, but on the other hand can also be checked remotely by the inspector. For example, it is possible to, during the phase of the checking of the engaged state of the braking elements (previous first round of the train by the inspector) check whether the braking elements are engaged on their way to the end of the train. Having arrived at the end of the train (of course, subject to the engaged states), the pressure-regulating system will disengage the brakes, and when returning to the pressure-regulating system, the inspector can then check the brakes a second time to see whether they have been disengaged. Of course it must be understood that it is also possible to check in reverse, first whether the brakes are all disengaged, and whether they are engaged when they return. In both cases it is clear that in this way the inspector has to make the rounds only once to check the brakes, which is a huge gain of time for the inspector, which becomes even more important when using a locomotive to provide the air pressure.

However, in situations in which the checking of the braking elements on the spot is no longer necessary, the method (as well as the system) according to the invention still offers the advantage that it performs the required pressure tests on the brake lines in an automated fashion.

In a preferred embodiment, the course of the predetermined regime of pressure comprises the following phases:

a. a first phase, in which the pressure is increased at a first speed to a first pressure level;
b. a second phase, in which the pressure is further increased from the first pressure level to a second pressure level, the second phase comprising a filling period wherein the pressure is increased at a second speed lower than the first speed, and the second phase further comprising a stabilisation period during which the pressure is stabilised to the second pressure level;
c. a third phase, in which the pressure is reduced from the second pressure level to a third pressure level at a third speed for a predetermined duration;
d. a fourth phase, in which the connection between the one or more central brake lines to a fixed or mobile compressed air unit is closed off during a predetermined period;
e. a fifth phase, in which the pressure is reduced from a fourth pressure level at the end of the fourth phase to a fifth pressure level for a predetermined maximum duration, and then kept constant for a variable duration;

f. a sixth phase, in which the pressure is increased from the fifth pressure level to a sixth pressure level, lower than the first pressure level, at a sixth speed for a predetermined minimum duration;

g. a seventh phase, in which the pressure is further increased from the sixth pressure level to a seventh pressure level, preferably approximately equal to the first pressure level, at a seventh speed, the seventh speed being lower in absolute value than the sixth speed in terms of absolute value;

wherein the checking that the braking elements of the railway vehicle are engaged is carried out during the fifth stage, and wherein controlling the central brake lines for obtaining the pressure level at which the brake reservoirs disengage the braking elements, starts the sixth phase and then the seventh phase after which the pressure is preferably kept approximately constant at the pressure level at which the brake elements are disengaged.

In alternative embodiments, the phases can be executed in different orders, and certain phases can even be omitted. Crucial herein is that the following substeps are always executed:

- fast filling during a predetermined period and/or to a predetermined pressure difference and/or final pressure;
- slow filling during a predetermined period and/or to a predetermined pressure difference and/or final pressure;
- fast pressure reduction during a predetermined period and/or to a predetermined pressure difference and/or final pressure;
- slow pressure reduction during a predetermined period and/or to a predetermined pressure difference and/or final pressure;
- closing the connection between the brake lines and the mobile compressed air unit during a predetermined period.

Checking the closed state of the braking elements is performed during a reduction of the pressure, preferably during the fast reduction of the pressure, whereby the reduction changes the pressure from a pressure higher than a pressure at which the braking elements engage, to a pressure lower than a pressure at which the pressure elements disengage.

In a preferred embodiment, the method comprises the following substeps (without imposing an order):

a. a first substep in which the pressure is increased at a first speed, to a predetermined pressure level and/or during a predetermined time period;

b. a second substep in which the pressure is increased at a second speed, to a predetermined pressure level and/or during a predetermined time period, whereby the first speed is lower than the second speed;

c. a third substep in which the pressure is reduced at a third speed, to a predetermined pressure level and/or during a predetermined time period;

d. a fourth substep in which the pressure is reduced at a fourth speed, to a predetermined pressure level and/or during a predetermined time period, whereby the absolute value of the fourth speed is lower than the absolute value of the third speed;

e. a fifth substep wherein the connection between the one or more central brake lines to a stationary or mobile compressed air unit are closed during a predetermined time period;

whereby checking the closed state of the braking elements of the railway vehicle is performed during a substep wherein the pressure is reduced from a pressure level higher than the pressure level at which the braking elements disengage, to a pressure level lower than the pressure level at which the braking elements engage, preferably in the substep in which the pressure is reduced at the speed with the highest absolute value.

It is to be understood that during at least one substep wherein the pressure is reduced, the pressure in the brake lines is reduced from a pressure level higher than the pressure level at which the braking elements disengage, to a pressure level lower than the pressure level at which the braking elements engage.

Preferably, a substep can be executed wherein the pressure is maintained at an essentially constant pressure level at which the braking elements are engaged (typically below 5.0 bar) during a predetermined period of time.

Preferably, a substep can be executed wherein the pressure is maintained at an essentially constant pressure level at which the braking elements are disengaged (typically above 5.0 bar) during a predetermined period of time.

Most preferably, both of the above substeps are performed.

By applying a highly controlled and pre-programmed pressure regime to the central brake lines, it is ensured that all possible courses of the pressure are controlled: rapid rise, slow rise, rapid decrease, slow decrease, stabilisation and constant phase. By performing all these phases under predetermined conditions, such as fixed initial pressure, fixed final pressure, fixed speed of pressure change and/or fixed (minimum/maximum) duration of phase, it can be ensured that the brake line(s) function properly, without the inspector having to orchestrate these phases manually. The pre-programmed regime can be set in such a way that it takes as short a time as possible.

The leakage test in the fourth phase is carried out in order to be able to quantify which pressure losses occur when 'cutting off' the central brake lines from the pressure imposed by the pressure-regulating system (from the compressed air unit). In the event of limited pressure losses during the leakage test, it is considered to be successful, and one goes on to a next phase. If not, the inspector is informed of this and can take the necessary measures. Note that this pre-programmed pressure regime initially (phases 1 to 4) serves to check the functioning of the brake lines (and thus also the brake reservoirs typically), and only in the later phases (5 to 7) the operation of the braking elements. It is checked whether the brake lines can achieve certain pressure levels (detect possible leaks), maintain them, and whether the pressure can be changed therein sufficiently quickly (or slowly and in a controlled manner). For this reason, the time period of phase 5 in which the pressure is kept approximately constant should be variable. Depending on the length of the train, the inspector will need more time to be able to check all braking elements during this period of constant pressure. The same applies to the period of constant pressure in the seventh phase, in which the inspector checks the braking elements again. It is also possible to preset the duration of these periods (for example, on the basis of number of wagons, length of railway vehicle, etc.) or this period can be terminated by the user themselves.

In a further preferred embodiment, the stabilisation period of the second phase has a duration of $(t_{f1} + t_{f2,fih} - 600s)/2$, where $t_{f1}$ is the duration of the first phase, and $t_{f2,fill}$ is the duration of the filling period of the second phase, and wherein the duration of the stabilisation period of the second phase is at least 30 seconds and is a maximum of 120 seconds.

In this way the applicant aims to give the stabilisation period an optimal duration, long enough on the one hand, that it is guaranteed that the air pressure in the central brake lines (and thus in the brake reservoirs) has been able to stabilise, without unnecessarily delaying the entire inspection process. For this reason, a formula for calculating the duration of the stabilisation period is opted for. Since the pressure-regulating system controls every phase of the regime, and therefore also knows the durations of the individual phases and sub-phases, it can calculate the desired duration of the stabilisation period without any problem. During this stabilisation period, it is ensured that the desired maximum pressure is achieved in all individual brake reservoirs (and not only in the central brake lines, where the pressure is measured).

In a preferred embodiment, the fifth phase starts at a difference between the third pressure level and the actual pressure level lower than 0.05 bar after approximately 10 seconds in the fourth phase, wherein if the difference is greater than 0.05 bar the fourth phase is prolonged by approximately 50 seconds, after which the new difference in pressure between the third pressure level and the actual pressure level is re-measured and the fifth phase starts at the new difference in pressure between the third pressure level and the actual pressure level lower than 0.3 bar, and where the step of exercising a predetermined pressure regime for monitoring is aborted at the new difference in pressure between the third pressure level and the actual pressure level higher than 0.3 bar and a notification thereof is displayed.

By programming the pre-programmed regime, and the pressure-regulating system that controls it, that in the event of a failure in a phase of the regime, the regime is stopped, the entire regime will not be unnecessarily gone through if it turns out sooner that the braking system does not meet certain requirements as tested by the pressure-regulating system and the regime. The regime is stopped and a warning is communicated to the inspector that deeper problems may be present in the braking system being checked. It is, of course, left to the inspector to evaluate this warning, since it is preferably provided with all relevant information about the exact failure, and preferably also information about the other phases. For example, an inspector may then decide to restart the check (one or more times), depending on the margin of failure or other facts.

In a preferred embodiment, a manual confirmation is required that the fifth pressure level is reached before the end of the predetermined maximum duration before the start of the sixth phase, preferably with the internal pressure being maintained at the fifth pressure level until the manual confirmation is received.

In a preferred embodiment, the braking elements are engaged under a determined internal pressure in the brake reservoirs and disengaged above the determined internal pressure in the brake reservoirs, the first pressure level being approximately equal to the determined internal pressure, and preferably wherein the determined internal pressure is approximately 5.0 bar.

It is of great importance that the level of the determined internal pressure which is the tipping point between engaged and disengaged braking elements is determined particularly accurately, and above all, can be achieved with particular precision (and from there the internal pressure can be further increased and reduced for engaging/disengaging). By equating the first pressure level with this tipping point, the regime for checking the operation guarantees that the engaging and disengaging of the braking elements can be sufficiently checked during the checking regime.

In a preferred embodiment, the central brake lines are vented prior to applying the predetermined pressure regime, preferably until the pressure in the central brake lines is approximately 0 bar (relative to atmospheric pressure).

Venting is necessary in order to start with (in theory) completely empty pipes, so that the results of the check cannot be affected by pre-existing physical parameters or situations. In this way, any deviations during the check logically indicate a problem and not a poorly calibrated initial state.

In a preferred embodiment, the pressure-regulating system is remotely controlled by a user, preferably via a portable electronic device, such as a smartphone, mobile phone, tablet, laptop or the like. In a still further preferred embodiment, the user can monitor the pressure-regulating system remotely, and among other things remotely read the pressure exerted in the central brake lines.

By making the pressure-regulating system remotely controllable by a user (the inspector), they can carry out their round for checking the engaged/disengaged condition of the braking elements more efficiently and faster. For example, adjustments (small or otherwise) can be made, it can be read whether problems arise (and the inspector has to return to the system, for example), and other parameters can be set remotely. As indicated earlier, in an ideal situation, while making their 'first round' to the end of the train (away from the pressure-regulating system), the inspector will check the condition of the braking elements and check whether they are all in a first state (for example, engaged). Once there, the inspector can then order the pressure to be adjusted in the central brake lines to a pressure suitable to bring the braking elements into the second state (in this example, disengaged), for example by a confirmation that all braking elements were found to be in the desired state while making their first round. On their way back, to the pressure-regulating system, the inspector can then check the condition of the braking elements and check whether they are in the second state. Additional advantages are that in this way all operations can easily be digitally registered, as well as all input from the inspector (for example comments about the braking elements). The main advantage, however, is that the user can remotely command the sixth phase to be started, to start the second inspection round, and thus only one full round of the railway vehicle is needed to perform the check on both the engaging as well as disengaging of the brakes.

In a preferred embodiment, the pressure-regulating system is adapted to register the inspection of the braking system in a centralised database.

Preferably the pressure-regulating system is suitable for connecting to a central server, in which the results (measurements, evaluation, etc.) of the inspection can be stored. In this way, it is also possible to register centrally which braking systems have been checked, which meet the requirements, and thus the necessary information can be easily retrieved.

In a preferred embodiment, the application of a predetermined pressure regime is done automatically.

In a second aspect, the invention relates to an improved device for checking a braking system of a railway vehicle, wherein the railway vehicle comprises a plurality of brake reservoirs for controlling braking elements on the basis of an internal pressure in the brake reservoir, and wherein the internal pressure in the brake reservoirs is controlled by one or more central brake lines, the device comprising a pressure-regulating system, suitable for connecting a fixed or mobile compressed air unit to the one or more central brake lines and regulating the pressure supplied to the one or more central brake lines, wherein the pressure-regulating system is adapted for the automated application of a predetermined pressure regime for checking from the fixed or mobile compressed air unit on the one or more central brake lines, preferably wherein the pressure-regulating system can be remotely controlled by a user, preferably also via a portable electronic device.

The applicant noticed that there is a lack of equipment that can assist inspectors in checking the braking systems of trains (railway vehicles), and especially in the automation of certain processes in this regard. In order to optimise the general process and to drastically reduce the time required for checking the braking systems, the applicant for that reason provides a device for this which comprises a pressure-regulating system which can be mounted between the compressed air unit and the central brake line(s) to connect them, wherein the pressure-regulating system can check (control) the pressure in the central brake line(s). The user (inspector) no longer has to manually impose the pressure regime under inspection of the central brake lines but can simply start the program and then monitor whether the desired results are achieved (discussed further in this document). In addition, it also offers the enormous advantage that the pressure-regulating system, and by extension the device, can be remotely controlled by the user (via tablet, for example), so that the inspector can perform their round more easily and quickly (see also previous arguments for this).

In a preferred embodiment, the predetermined pressure regime is programmed with the following phases:

    a. a first phase, in which the pressure is increased at a first speed to a first pressure level;
    b. a second phase, in which the pressure is further increased from the first pressure level to a second pressure level, the second phase comprising a filling period wherein the pressure is increased at a second speed lower than the first speed, and the second phase further comprising a stabilisation period during which the pressure is stabilised to the second pressure level;
    c. a third phase, in which the pressure is reduced from the second pressure level to a third pressure level at a third speed for a predetermined duration;
    d. a fourth phase, in which the connection between the one or more central brake lines to a fixed or mobile compressed air unit is closed off during a predetermined period;
    e. a fifth phase, in which the pressure is reduced from a fourth pressure level at the end of the fourth phase to a fifth pressure level for a predetermined maximum duration, and then kept constant for a variable duration;
    f. a sixth phase, in which the pressure is increased from the fifth pressure level to a sixth pressure level, lower than the first pressure level, at a sixth speed for a predetermined minimum duration;

g. a seventh phase, in which the pressure is further increased from the sixth pressure level to a seventh pressure level, preferably approximately equal to the first pressure level, at a seventh speed, the seventh speed being lower in absolute value than the sixth speed in terms of absolute value;

requiring manual confirmation from the user for starting the sixth phase.

In a further preferred embodiment the pressure-regulating system is adapted to determine a duration of the stabilisation period of the second phase by means of the following formula: (tf1 + tf2,fill - 600s)/2;

where tf1 is the duration of the first phase, and tf2,fill is the duration of the filling period of the second phase, and wherein the duration of the stabilisation period of the second phase is at least 30 seconds and is a maximum of 120 seconds.

In a preferred embodiment, the pressure-regulating system starts the fifth phase at a difference between the third pressure level and the actual pressure level of lower than 0.05 bar after approximately 10 seconds in the fourth phase, wherein at a difference greater than 0.05 bar the fourth phase is lengthened by approximately 50 seconds, after which the new difference in pressure between the third pressure level and the actual pressure level is again measured by the pressure-regulating system and the pressure-regulating system starts the fifth phase at the new difference in pressure between the third pressure level and the actual pressure level of lower than 0.3 bar, and wherein the step of applying a predetermined pressure regime for checking is stopped by the pressure-regulating system at the new difference in pressure between the third pressure level and the actual pressure level of higher than 0.3 bar, and wherein a notification thereof is given.

In a third aspect, the invention relates to the use of a device as discussed in this document for checking a braking system of a railway vehicle, preferably using a method as discussed in this document.

## BRIEF DESCRIPTION OF THE DRAWINGS

**Figure 1** describes a possible predetermined pressure regime, or filling curve, for checking the brakes of a railway vehicle according to an embodiment of the invention.

**Figure 2** describes generally the known methods for checking the braking systems.

**Figure 3** describes generally a method for checking a braking system of a railway vehicle according to an embodiment of the invention.

## DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, 'a' and 'the' refer to both the singular and the plural, unless the context presupposes otherwise. For example, 'a segment' means one or more segments.

When 'approximately' or 'around' is used in this document with a measurable quantity, a parameter, a length of time or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations apply in the described invention. However, it must be understood that the value of a quantity used where the term 'about' or 'around' is used, is itself specifically disclosed.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

The pressures that are discussed should be understood as overpressure relative to atmospheric pressure.

Quoting numerical intervals by the endpoints comprises all integers, fractions and/or real numbers between the endpoints, these endpoints included.

The term 'railway vehicle' refers in this document to a train consisting of one or more parts (carriages such as passenger carriages but also others such as goods wagons) but should not be interpreted as limited to train traffic. All rail traffic may be eligible for this. Typically, several of the parts comprise separate braking elements controlled from a central brake line, wherein the central brake lines of adjacent parts can be connected to each other so as to be controlled from a central point.

In what follows, the invention will be described by way of non-limiting examples illustrating the invention, and which are not intended to and should not be interpreted as limiting the scope of the invention.

EXAMPLES

EXAMPLE 1:

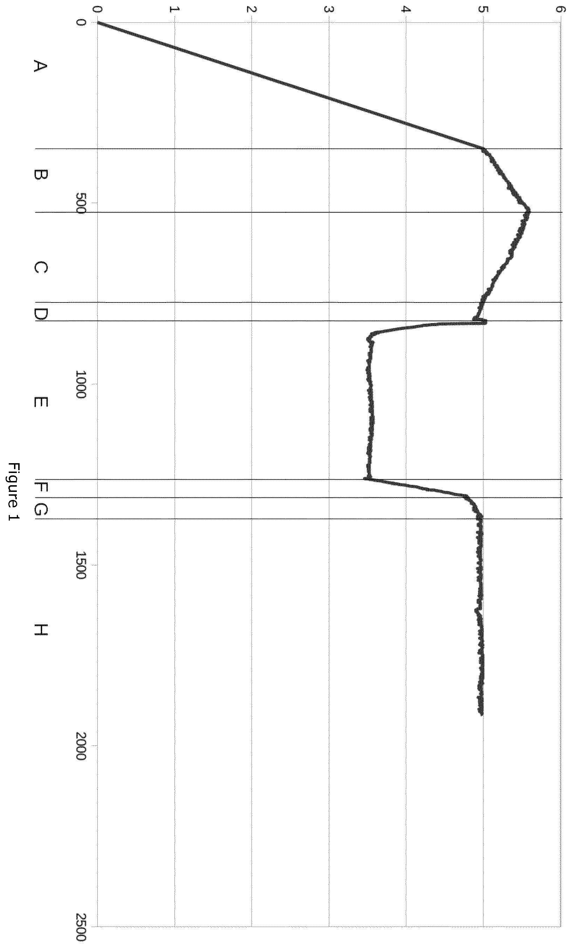

Figure 1 describes a possible course of the pressure regime imposed by the pressure-regulating system on the central brake line(s) of a railway vehicle in order to carry out a check on the thus built-up pressures in the brake lines. By means of this check, in the first phases, the reaction of the central brake lines to the imposition of pressures is examined, in order to check whether pressure losses occur, whether certain pressure levels can be achieved, and whether the pressure can be changed at a certain speed, given that these conditions are all crucial to the operation of the braking system. Only in the further phases (5th to 7th) are the brakes themselves inspected.

The pressure regime of Figure 1 goes through 7 phases, as also discussed in this document. It should be understood here that prior to the pressure regime, the brake lines are preferably completely vented (and brought to a pressure of about 0 bar) before being refilled. For example, in the first phase (A), the pressure can be allowed to rise to about 5 bar in a controlled manner. Preferably, the first phase runs for at least 6 minutes. Preferably, the pressure increases approximately constantly over this first phase. In this first phase, the capacity to quickly fill up from a low pressure is mainly tested. In the second phase (B), the pressure is built up more slowly to approximately 5.4 bar, preferably in at least 2 minutes, preferably again at a constant speed of the pressure change. This phase also includes a stabilisation period which, depending on the duration of previous phases, lasts between approximately 30 seconds and 120 seconds. In a further embodiment, an algorithm (see earlier in this document) has been worked out for this purpose in order to determine an optimal duration of the stabilisation period.

At the end of the second phase, a third phase (C) starts, with the pressure being reduced to about 5.0 bar, preferably at a rate of about 0.2 bar per minute (and thus over a time period of about 2 minutes). The fourth phase (D) is a leakage test in which the central brake line is temporarily completely shut off and is no longer kept at the desired pressure by the pressure-regulating system (and the compressed air unit). Here it is checked whether the central brake line undergoes any excessive pressure drop for a short period. The applicant proposed to run this phase for about 10 seconds, after which the pressure loss is measured. If lower than 0.05 bar, the phase is considered successful and the fifth phase (E) is started. If not, the fourth phase is extended, preferably by 50 seconds, and the pressure loss is checked again. If this loss is lower than a certain value, in this case 0.3 bar, the test is successful and the fifth phase (E) is started. If the pressure loss is too high, the phase is considered to have failed, and the pressure regime stops and the user is informed of this. The fifth stage (E) involves a rapid pressure drop, wherein the pressure is reduced to about 3.5 bar in a maximum of 30 seconds. Note that the value of 3.5 bar is not fixed here but can generally be understood as a value at which the braking elements should typically be engaged. This pressure is then kept constant for a certain period, while the user checks the braking elements manually / on the spot until the user confirms manually that this phase has been successful (all braking elements are disengaged). Preferably this is done remotely via an electronic device, and in this way the sixth phase (F) can start, typically quickly followed by the seventh phase (G). In the sixth phase, the pressure rises quickly to about 4.8 bar in a short time, for example in maximum 1 minute, and the pressure then slowly rises to about 5.0 bar. Again, this 5.0 bar should not be interpreted as an absolute guideline, but rather as a value at which the braking elements should be disengaged (in other words, higher values are certainly allowed). After this, the pressure is kept essentially constant, typically again until a manual confirmation by the user (or the closing of the process), while the user again checks the braking elements (on the spot), this time whether they are all disengaged. The reason for the rapid pressure change at the beginning of phase 5 is so that the inspector can start their control round (step c) as quickly as possible. The same reasoning applies to the rapid pressure change in phase 6 (and 7) so that the inspector can start the second inspection round (step e).

It should be understood here that other courses are also possible, for example in which phases 5 to 7 are interchanged in order to obtain a course in which the braking elements are first disengaged, and are subsequently engaged, without the essence of the invention hereby changing.

Finally, it should be noted that the pressures discussed are in no way limiting and are often also subject to official regulations. While 5.0 bar is currently the norm for the boundary between disengaged and engaged braking elements, it may shift in the future (e.g. 4.9 bar, 4.8 bar, 4.7 bar, 4.6 bar, 4.5 bar, 5.1 bar, 5.2 bar, 5.3 bar, 5.4 bar, etc.). In that sense it should be understood that any modifications herein can be easily applied to the core of the invention. A similar remark should be taken into account with regard to the value 5.4 bar, which at the time of filing is an international standard for the 'overfilling' of pipes and braking elements. This too may shift in the future (for example 5.3 bar, 5.2 bar, 5.5 bar, 5.6 bar, 5.7 bar, 5.8 bar, etc.), without the core of the invention changing substantially.

EXAMPLE 2:

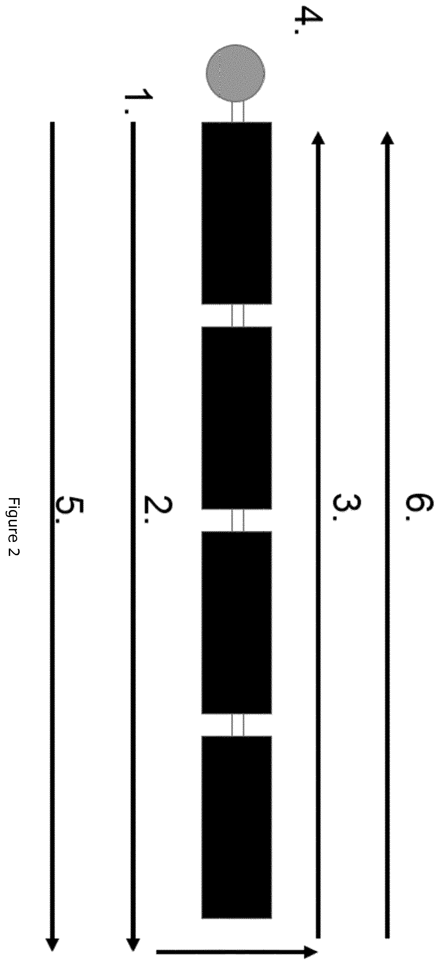

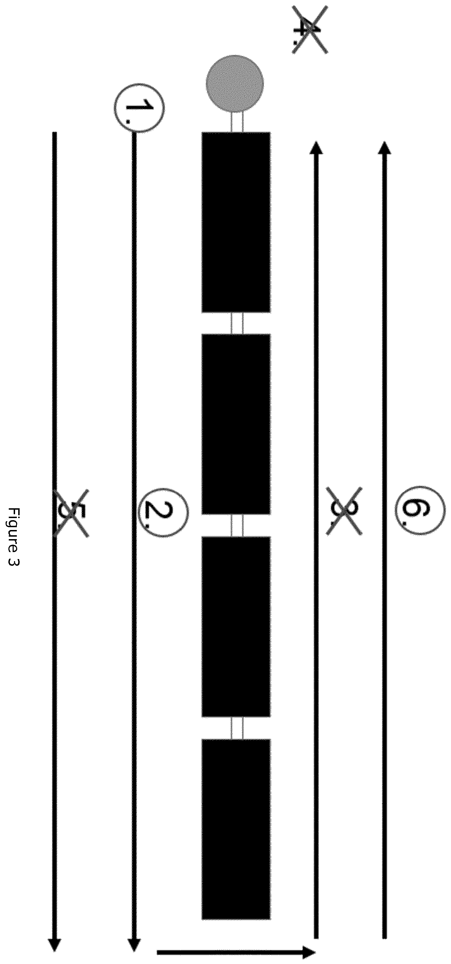

Figures 2 and 3 describe a visual workflow of methods for checking braking systems as known in the prior art (Figure 2) and according to an embodiment of the invention (Figure 3). In both situations, it is started with the filling, the stabilisation of the pressure and a leakage test (1). It is clearly visible here that in the known methods, the user after the first check (2) as to whether the braking elements are all in a first state (engaged) must return (3) to the central point to adjust the pressure there (4), so that the braking elements (in theory) are in the second state (disengaged), and then must make a complete round again to check the braking elements (5) and then return (6). It should be understood that these rounds are very time-consuming, and that by getting rid of one of the rounds, a great deal of time is gained. In the method according to the invention as in Figure 3, after the filling, the stabilisation of the pressure and a leakage test (1), a first check (2) is performed on the first state (engaged), then the pressure-regulating system is controlled (4) to adjust the pressure to change the braking elements into the second state, and the user can check the braking elements on their way back (5). Figure 3 has been adapted to illustrate the differences with Figure 2 as clearly as possible.

The present invention should not be construed as being limited to the embodiments described above and certain modifications or changes may be added to the examples described without having to re-evaluate the appended claims. For example, the present invention has been described with reference to train sets, but it is to be understood that the invention may be applied to e.g. transport systems of this nature (other railway vehicles such as a monorail, underground, tram and others).

**Claims**

1.  Method for checking a braking system of a railway vehicle, wherein the railway vehicle comprises a plurality of brake reservoirs for controlling braking elements on the basis of an internal pressure in the brake reservoir, and wherein the internal pressure in the brake reservoirs is controlled by one or more central brake lines, the method comprising the following steps:

    a. connecting the one or more central brake lines to a fixed or mobile compressed air unit;
    b. applying a predetermined, pre-programmed pressure regime for checking from the fixed or mobile compressed air unit on the one or more central brake lines, whereby the regime follows a pre-programmed course;
    c. checking that the braking elements of the railway vehicle are engaged;
    d. controlling the central brake lines to obtain a pressure level at which the brake reservoirs disengage the braking elements;
    e. checking that the braking elements of the railway vehicle are disengaged;

    **characterised in that** a pressure-regulating system is provided between the one or more central brake lines and the fixed or mobile compressed air unit, wherein the pressure-regulating system is adapted for monitoring the pressure from the fixed or mobile compressed air unit in the central brake lines and for exercising the predetermined regime of pressure, and wherein the central brake lines are controlled via the pressure-regulating system for obtaining the pressure level at which the brake reservoirs disengage the braking elements, the pre-programmed course comprising at least the following phases: rapid pressure rise, rapid decrease of pressure, slow rise in pressure, slow pressure drop, and a constant phase of pressure;
wherein the pre-programmed course of the pressure regime comprises the following substeps:

    i. a first substep in which the pressure is increased at a first speed, to a predetermined pressure level and/or during a predetermined time period;
    ii. a second substep in which the pressure is increased at a second speed, to a predetermined pressure level and/or during a predetermined time period, whereby the second speed is lower than the first speed;
    iii. a third substep in which the pressure is reduced at a third speed, to a predetermined pressure level and/or during a predetermined time period;
    iv. a fourth substep in which the pressure is reduced at a fourth speed, to a predetermined pressure level and/or during a predetermined time period, whereby the absolute value of the fourth speed is lower than the absolute value of the third speed;
    v. a fifth substep in which the connection between the one or more central brake lines and the fixed or mobile compressed air unit is closed during a predetermined time period;

whereby checking that the braking elements of the railway vehicle are engaged is performed during a substep in which the pressure is reduced from a pressure level higher than the pressure level at which the braking elements disengage, to a pressure level lower than the pressure level at which the braking elements disengage, preferably during the substep in which the pressure is reduced at the speed with the highest absolute value.

2.  Method for checking a braking system of a railway vehicle according to the previous claim 1, wherein the step of checking whether the braking elements of the railway vehicle are engaged and the step of checking whether the braking elements of the railway vehicle are disengaged are carried out on the spot.

3.  Method for checking a braking system of a railway vehicle according to any of the previous claims 1 to 2, wherein the course of the predetermined pressure regime comprises the following phases:

    a. a first phase, in which the pressure is increased at a first speed to a first pressure level;
    b. a second phase, in which the pressure is further increased from the first pressure level to a second pressure level, the second phase comprising a filling period wherein the pressure is increased at a second speed lower than the first speed, and the second phase further comprising a stabilisation period during which the pressure is stabilised to the second pressure level;

c. a third phase, in which the pressure is reduced from the second pressure level to a third pressure level at a third speed for a predetermined duration;

d. a fourth phase, in which the connection between the one or more central brake lines to a fixed or mobile compressed air unit is closed off during a predetermined period;

e. a fifth phase, in which the pressure is reduced from a fourth pressure level at the end of the fourth phase to a fifth pressure level for a predetermined maximum duration, and then kept constant for a variable duration;

f. a sixth phase, in which the pressure is increased from the fifth pressure level to a sixth pressure level, lower than the first pressure level, at a sixth speed for a predetermined minimum duration;

g. a seventh phase, in which the pressure is further increased from the sixth pressure level to a seventh pressure level, preferably approximately equal to the first pressure level, at a seventh speed, the seventh speed being lower in absolute value than the sixth speed in terms of absolute value;

wherein the checking that the braking elements of the railway vehicle are engaged is carried out during the fifth stage, and wherein controlling the central brake lines for obtaining the pressure level at which the brake reservoirs disengage the braking elements, starts the sixth phase and then the seventh phase after which the pressure is preferably kept approximately constant at the pressure level at which the brake elements are disengaged.

4. Method for checking a braking system of a railway vehicle according to the previous claim 3, wherein the stabilisation period of the second phase has a duration of $(t_{f1} + t_{f2,fill} - 600s)/2$, where $t_{f1}$ is the duration of the first phase, and $t_{f2,fill}$ is the duration of the filling period of the second phase, and wherein the duration of the stabilisation period of the second phase is at least 30 seconds and is a maximum of 120 seconds.

5. Method for checking a braking system of a railway vehicle according to any of the previous claims 3 or 4, wherein the fifth phase starts at a difference between the third pressure level and the actual pressure level of lower than 0.05 bar after approximately 10 seconds in the fourth phase, wherein if the difference is greater than 0.05 bar the fourth phase is prolonged by approximately 50 seconds, after which the new difference in pressure between the third pressure level and the actual pressure level is re-measured and the fifth phase starts at the new difference in pressure between the third pressure level and the actual pressure level of lower than 0.3 bar, and where the step of applying a predetermined pressure regime for checking is aborted at the new difference in pressure between the third pressure level and the actual pressure level of higher than 0.3 bar and a notification thereof is displayed.

6. Method for checking a braking system of a railway vehicle according to any of the previous claims 3 to 5, wherein a manual confirmation is required that the fifth pressure level is reached before the end of the predetermined maximum duration, for starting the sixth phase, preferably with the internal pressure being maintained at the fifth pressure level until the manual confirmation is received.

7. Method for checking a braking system of a railway vehicle according to any of the previous claims 3 to 6, wherein the braking elements are engaged under a determined internal pressure in the brake reservoirs and disengaged above the determined internal pressure in the brake reservoirs, the first pressure level being approximately equal to the determined internal pressure, and preferably wherein the determined internal pressure is approximately 5.0 bar with respect to atmospheric pressure.

8. Method for checking a braking system of a railway vehicle according to any of the previous claims 1 to 7, wherein the pressure-regulating system is remotely controlled by a user, preferably via a portable electronic device.

9. Method for checking a braking system of a railway vehicle according to any of the previous claims 1 to 8, wherein the pressure-regulating system is adapted to register the checking of the braking system in a centralised database.

10. Method for checking a braking system of a railway vehicle according to any of the previous claims 1 to 9, wherein the application of a predetermined pressure regime for checking is automated.

11. Device for checking a braking system of a railway vehicle, wherein the railway vehicle comprises a plurality of brake reservoirs for controlling braking elements on the basis of an internal pressure in the brake reservoir, and wherein the internal pressure in the brake reservoirs is controlled by one or more central brake lines, the device comprising a pressure-regulating system, suitable for connecting a fixed or mobile compressed air unit to the one or more central brake lines and regulating the pressure supplied to the one or more central brake lines, wherein the pressure-regulating system is adapted for the automated application of a predetermined and pre-programmed pressure regime for checking from the fixed or mobile compressed air unit on the one or more central brake lines, wherein the regime follows a pre-programmed course, wherein the pre-programmed course comprises at least the following phases: rapid pressure rise, rapid pressure drop, slow pressure rise, slow pressure drop, and a constant phase of the pressure; preferably wherein the pressure-regulating system can be remotely controlled by a user, further preferably via a portable electronic device, wherein the pre-programmed course of the pressure regime comprises the following substeps:

> i. a first substep in which the pressure is increased at a first speed, to a predetermined pressure level and/or during a predetermined time period;
> ii. a second substep in which the pressure is increased at a second speed, to a predetermined pressure level and/or during a predetermined time period, whereby the second speed is lower than the first speed;
> iii. a third substep in which the pressure is reduced at a third speed, to a predetermined pressure level and/or during a predetermined time period;
> iv. a fourth substep in which the pressure is reduced at a fourth speed, to a predetermined pressure level and/or during a predetermined time period, whereby the absolute value of the fourth speed is lower than the absolute value of the third speed;
> v. a fifth substep in which the connection between the one or more central brake lines and the fixed or mobile compressed air unit is closed during a predetermined time period;

whereby checking that the braking elements of the railway vehicle are engaged is performed during a substep in which the pressure is reduced from a pressure level higher than the pressure level at which the braking elements disengage, to a pressure level lower than the pressure level at which the braking elements disengage, preferably during the substep in which the pressure is reduced at the speed with the highest absolute value.

12. Device for checking a braking system of a railway vehicle according to the previous claim 11, wherein the predetermined pressure regime is programmed with the following phases:

a. a first phase, in which the pressure is increased at a first speed to a first pressure level;
b. a second phase, in which the pressure is further increased from the first pressure level to a second pressure level, the second phase comprising a filling period wherein the pressure is increased at a second speed lower than the first speed, and the second phase further comprising a stabilisation period during which the pressure is stabilised to the second pressure level;
c. a third phase, in which the pressure is reduced from the second pressure level to a third pressure level at a third speed for a predetermined duration;
d. a fourth phase, in which the connection between the one or more central brake lines to a fixed or mobile compressed air unit is closed off during a predetermined period;
e. a fifth phase, in which the pressure is reduced from a fourth pressure level at the end of the fourth phase to a fifth pressure level for a predetermined maximum duration, and then kept constant for a variable duration;
f. a sixth phase, in which the pressure is increased from the fifth pressure level to a sixth pressure level, lower than the first pressure level, at a sixth speed for a predetermined minimum duration;
g. a seventh phase, in which the pressure is further increased from the sixth pressure level to a seventh pressure level, preferably approximately equal to the first pressure level, at a seventh speed, the seventh speed being lower in absolute value than the sixth speed in terms of absolute value, preferably wherein the pressure is kept essentially constant at the seventh pressure level for a variable period of time;

requiring manual confirmation from the user for the start of the sixth phase.

13. Device for checking a braking system of a railway vehicle according to the previous claim 12, wherein the pressure-regulating system is adapted for determining a duration of the stabilisation period of the second phase by means of the following formula:

$$(t_{f1} + t_{f2,fill} - 600s)/2;$$

where $t_{f1}$ is the duration of the first phase, and $t_{f2,fill}$ is the duration of the filling period of the second phase, and wherein the duration of the stabilisation period of the second phase is at least 30 seconds and is a maximum of 120 seconds.

14. Device according to any of previous claims 12 to 13, wherein the pressure-regulating system starts the fifth phase at a difference between the third pressure level and the actual pressure level of lower than 0.05 bar after approximately 10 seconds in the fourth phase, wherein at a difference greater than 0.05 bar the fourth phase is lengthened by approximately 50 seconds, after which the new difference in pressure between the third pressure level and the actual pressure level is again measured by the pressure-regulating system and the pressure-regulating system starts the fifth phase at the new difference in pressure between the third pressure level and the actual pressure level of lower than 0.3 bar, and wherein the step of applying a predetermined pressure regime for checking is aborted by the pressure-regulating system at the new difference in pressure between the third pressure level and the actual pressure level of higher than 0.3 bar, and wherein a notification thereof is given.

**Patentansprüche**

1. Verfahren zum Überprüfen eines Bremssystems eines Schienenfahrzeugs, wobei das Schienenfahrzeug mehrere Bremsreservoire zum Steuern von Bremselementen auf der Basis eines Innendrucks in dem Bremsreservoir umfasst und wobei der Innendruck in dem Bremsreservoir durch eine oder mehrere zentrale Bremsleitungen gesteuert wird, wobei das Verfahren die folgenden Schritte umfasst:

    a. Verbinden der einen oder mehreren zentralen Bremsleitungen mit einer stationären oder mobilen Drucklufteinheit,
    b. Anwenden eines vorab festgelegten, vorprogrammierten Druckregimes zum Prüfen der einen oder mehreren zentralen Bremsleitungen durch die stationäre oder mobile Drucklufteinheit, wobei das Regime einem vorprogrammierten Ablauf folgt,
    c. Überprüfen, dass die Bremselemente des Schienenfahrzeugs in Eingriff stehen,
    d. Steuern der zentralen Bremsleitungen, um einen Druckpegel zu erzielen, bei dem die Bremsreservoire die Bremselemente lösen,
    e. Überprüfen, dass die Bremselemente des Schienenfahrzeugs gelöst sind,

**dadurch gekennzeichnet, dass** zwischen der einen oder den mehreren zentralen Bremsleitungen und der stationären oder mobilen Drucklufteinheit ein druckregulierendes System bereitgestellt ist, wobei das druckregulierende System dafür eingerichtet ist, den Druck von der stationären oder mobilen Drucklufteinheit in den zentralen Bremsleitungen zu überwachen und das vorab festgelegte Regime des Drucks auszuüben, und wobei die zentralen Bremsleitungen über das druckregulierende System gesteuert werden, um den Druckpegel zu erzeugen, bei dem die Bremsreservoire die Bremselemente lösen, wobei der vorprogrammierte Ablauf zumindest die folgenden Phasen umfasst: schneller Druckanstieg, schnelle Abnahme des Drucks, langsamer Anstieg des Drucks, langsamer Druckabfall und eine konstante Druckphase, wobei der vorprogrammierte Ablauf des Druckregimes die folgenden Teilschritte umfasst:

    i. einen ersten Teilschritt, in dem der Druck mit einer ersten Geschwindigkeit auf einen vorab festgelegten Druckpegel und/oder während einer vorab festgelegten Zeitperiode erhöht wird,
    ii. einen zweiten Teilschritt, in dem der Druck mit einer zweiten Geschwindigkeit auf einen vorab festgelegten Druckpegel und/oder während einer vorab festgelegten Zeitperiode erhöht wird, wobei die zweite Geschwindigkeit geringer als die erste Geschwindigkeit ist,
    iii. einen dritten Teilschritt, in dem der Druck mit einer dritten Geschwindigkeit auf einen vorab festgelegten Druckpegel und/oder während einer vorab festgelegten Zeitperiode gesenkt wird,
    iv. einen vierten Teilschritt, in dem der Druck mit einer vierten Geschwindigkeit auf einen vorab festgelegten Druckpegel und/oder während einer vorab festgelegten Zeitperiode gesenkt wird, wobei der absolute Wert der vierten Geschwindigkeit kleiner als der absolute Wert der dritten Geschwindigkeit ist,
    v. einen fünften Teilschritt, in dem die Verbindung zwischen der einen oder den mehreren Bremsleitungen und der stationären oder mobilen Drucklufteinheit während einer vorab festgelegten Zeitperiode geschlossen ist,

wobei das Überprüfen, dass die Bremselemente des Schienenfahrzeugs in Eingriff stehen, während eines Teilschritts durchgeführt wird, in dem der Druck von einem Druckpegel, der höher als der Druckpegel ist, bei dem die Bremselemente gelöst werden, auf einen Druckpegel gesenkt wird, der niedriger als der Druckpegel ist, bei dem die Bremselemente gelöst werden, vorzugsweise während des Teilschritts, in dem der Druck mit der Geschwindigkeit mit dem höchsten absoluten Wert gesenkt wird.

2. Verfahren zum Überprüfen eines Bremssystems für ein Schienenfahrzeug nach dem vorhergehenden Anspruch 1, wobei der Schritt des Überprüfens, ob die Bremselemente des Schienenfahrzeugs in Eingriff stehen, und der Schritt des Überprüfens, ob die Bremselemente des Schienenfahrzeugs gelöst sind, vor Ort ausgeführt werden.

3. Verfahren zum Überprüfen eines Bremssystems für ein Schienenfahrzeug nach einem der vorhergehenden Ansprüche 1 bis 2, wobei der Ablauf des vorab festgelegten Druckregimes die folgenden Phasen umfasst:

   a. eine erste Phase, in welcher der Druck mit einer ersten Geschwindigkeit auf einen ersten Druckpegel erhöht wird,
   b. eine zweite Phase, in welcher der Druck von dem ersten Druckpegel weiter auf einen zweiten Druckpegel erhöht wird, wobei die zweite Phase eine Füllperiode umfasst, wobei der Druck mit einer zweiten Geschwindigkeit erhöht wird, die geringer als die erste Geschwindigkeit ist, und wobei die zweite Phase ferner eine Stabilisierungsperiode umfasst, während der der Druck bei dem zweiten Druckpegel stabilisiert wird,
   c. eine dritte Phase, in welcher der Druck mit einer dritten Geschwindigkeit für eine vorab festgelegte Dauer von dem zweiten Druckpegel auf einen dritten Druckpegel gesenkt wird,
   d. eine vierte Phase, in welcher die Verbindung zwischen der einen oder den mehreren zentralen Bremsleitungen und einer stationären oder mobilen Drucklufteinheit während einer vorab festgelegten Periode geschlossen ist,
   e. eine fünfte Phase, in welcher der Druck von einem vierten Druckpegel am Ende der vierten Phase für eine vorab festgelegte maximale Dauer auf einen fünften Druckpegel gesenkt und dann für eine variable Dauer konstant gehalten wird,
   f. eine sechste Phase, in welcher der Druck mit einer sechsten Geschwindigkeit für eine vorab festgelegte minimale Dauer von dem fünften Druckpegel auf einen sechsten Druckpegel, der niedriger als der erste Druckpegel ist, erhöht wird,
   g. eine siebente Phase, in welcher der Druck mit einer siebenten Geschwindigkeit von dem sechsten Druckpegel weiter auf einen siebenten Druckpegel erhöht wird, der vorzugsweise etwa gleich dem ersten Druckpegel ist, wobei der absolute Wert der siebenten Geschwindigkeit kleiner als der absolute Wert der sechsten Geschwindigkeit ist,

   wobei das Überprüfen, dass die Bremselemente des Schienenfahrzeugs in Eingriff stehen, während der fünften Stufe ausgeführt wird und wobei das Steuern der zentralen Bremsleitungen zum Erzielen des Druckpegels, bei dem die Bremsreservoire die Bremselemente lösen, die sechste Phase und dann die siebente Phase beginnt, nach welcher der Druck vorzugsweise etwa konstant bei dem Druckpegel gehalten wird, bei dem die Bremselemente gelöst sind.

4. Verfahren zum Prüfen eines Bremssystems für ein Schienenfahrzeug nach dem vorhergehenden Anspruch 3, wobei die Stabilisierungsperiode der zweiten Phase eine Dauer von $(t_{f1} + t_{f2,fill} - 600s)/2$ aufweist, wobei $t_{f1}$ die Dauer der ersten Phase ist und $t_{f2,fill}$ die Dauer der Füllperiode der zweiten Phase ist und wobei die Dauer der Stabilisierungsperiode der zweiten Phase mindestens 30 Sekunden und maximal 120 Sekunden beträgt.

5. Verfahren zum Überprüfen eines Bremssystems für ein Schienenfahrzeug nach einem der vorhergehenden Ansprüche 3 oder 4, wobei die fünfte Phase bei einer Differenz zwischen dem dritten Druckpegel und dem tatsächlichen Druckpegel von weniger als 0,05 bar nach etwa 10 Sekunden in der vierten Phase beginnt, wobei, wenn die Differenz größer als 0,05 bar ist, die vierte Phase um etwa 50 Sekunden verlängert wird, wonach die neue Druckdifferenz zwischen dem dritten Druckpegel und dem tatsächlichen Druckpegel erneut gemessen wird, und die fünfte Phase bei der neuen Druckdifferenz zwischen dem dritten Druckpegel und dem tatsächlichen Druckpegel von weniger als 0,3 bar beginnt, und wobei der Schritt des Anwendens eines vorab festgelegten Druckregimes zum Überprüfen bei der neuen Druckdifferenz zwischen dem dritten Druckpegel und dem aktuellen Druckpegel von mehr als 0,3 bar abgebrochen und eine Benachrichtigung darüber angezeigt wird.

6. Verfahren zum Überprüfen eines Bremssystems für ein Schienenfahrzeug nach einem der vorhergehenden Ansprüche 3 bis 5, wobei darüber, dass der fünfte Druckpegel vor dem Ende der vorab festgelegten maximalen Dauer erreicht ist, eine manuelle Bestätigung erforderlich ist, um die sechste Phase zu beginnen, wobei der Innendruck vorzugsweise bei dem fünften Druckpegel gehalten wird, bis die manuelle Bestätigung empfangen wird.

7. Verfahren zum Überprüfen eines Bremssystems für ein Schienenfahrzeug nach einem der vorhergehenden Ansprüche 3 bis 6, wobei die Bremselemente unter einem festgelegten Innendruck in den Bremsreservoiren in Eingriff stehen und über dem festgelegten Innendruck in den Bremsreservoiren gelöst sind, wobei der erste Druckpegel vorzugsweise etwa gleich dem festgelegten Innendruck ist und wobei der festgelegte Innendruck vorzugsweise etwa 5,0 bar in Bezug auf den atmosphärischen Druck beträgt.

8. Verfahren zum Überprüfen eines Bremssystems für ein Schienenfahrzeug nach einem der vorhergehenden Ansprüche 1 bis 7, wobei das druckregulierende System von einem Anwender ferngesteuert wird, vorzugsweise über eine transportable elektronische Vorrichtung.

9. Verfahren zum Überprüfen eines Bremssystems für ein Schienenfahrzeug nach einem der vorhergehenden Ansprüche 1 bis 8, wobei das druckregulierende System dafür eingerichtet ist, das Überprüfen des Bremssystems in einem Zentralregister zu registrieren.

10. Verfahren zum Überprüfen eines Bremssystems für ein Schienenfahrzeug nach einem der vorhergehenden Ansprüche 1 bis 9, wobei das Anwenden eines vorab festgelegten Druckregimes zum Überprüfen automatisiert ist.

11. Vorrichtung zum Überprüfen eines Bremssystems eines Schienenfahrzeugs, wobei das Schienenfahrzeug mehrere Bremsreservoire zum Steuern von Bremselementen auf der Basis eines Innendrucks in dem Bremsreservoir umfasst und wobei der Innendruck in dem Bremsreservoir durch eine oder mehrere zentrale Bremsleitungen gesteuert wird, wobei die Vorrichtung ein druckregulierendes System umfasst, das dazu geeignet ist, eine stationäre oder mobile Drucklufteinheit mit der einen oder den mehreren zentralen Bremsleitungen zu verbinden und den Druck zu regulieren, der auf die eine oder mehreren zentralen Bremsleitungen angewandt wird, wobei das druckregulierende System für das automatische Anwenden eines vorab festgelegten und vorprogrammierten Druckregimes zum Überprüfen der stationären oder mobilen Drucklufteinheit an der einen oder den mehreren Bremsleitungen eingerichtet ist, wobei das Regime einem vorprogrammierten Ablauf folgt, wobei der vorprogrammierte Ablauf zumindest die folgenden Phasen umfasst: schneller Druckanstieg, schnelle Abnahme des Drucks, langsamer Anstieg des Drucks, langsamer Druckabfall und eine konstante Druckphase, wobei das druckregulierende System vorzugsweise von einem Anwender ferngesteuert werden kann, des Weiteren vorzugsweise über eine transportable elektronische Vorrichtung, wobei der vorprogrammierte Ablauf des Druckregimes die folgenden Teilschritte umfasst:

i. einen ersten Teilschritt, in dem der Druck mit einer ersten Geschwindigkeit auf einen vorab festgelegten Druckpegel und/oder während einer vorab festgelegten Zeitperiode erhöht wird,
ii. einen zweiten Teilschritt, in dem der Druck mit einer zweiten Geschwindigkeit auf einen vorab festgelegten Druckpegel und/oder während einer vorab festgelegten Zeitperiode erhöht wird, wobei die zweite Geschwindigkeit geringer als die erste Geschwindigkeit ist,
iii. einen dritten Teilschritt, in dem der Druck mit einer dritten Geschwindigkeit auf einen vorab festgelegten Druckpegel und/oder während einer vorab festgelegten Zeitperiode gesenkt wird,
iv. einen vierten Teilschritt, in dem der Druck mit einer vierten Geschwindigkeit auf einen vorab festgelegten Druckpegel und/oder während einer vorab festgelegten Zeitperiode gesenkt wird, wobei der absolute Wert der vierten Geschwindigkeit kleiner als der absolute Wert der dritten Geschwindigkeit ist,
v. einen fünften Teilschritt, in dem die Verbindung zwischen der einen oder den mehreren Bremsleitungen und der stationären oder mobilen Drucklufteinheit während einer vorab festgelegten Zeitperiode geschlossen ist,

wobei das Überprüfen, dass die Bremselemente des Schienenfahrzeugs in Eingriff stehen, während eines Teilschritts durchgeführt wird, in dem der Druck von einem Druckpegel, der höher als der Druckpegel ist, bei dem die Bremselemente gelöst werden, auf einen Druckpegel gesenkt wird, der niedriger als der Druckpegel ist, bei dem die Bremselemente gelöst werden, vorzugsweise während des Teilschritts, in dem der Druck mit der Geschwindigkeit mit dem höchsten absoluten Wert gesenkt wird.

12. Vorrichtung zum Überprüfen eines Bremssystems eines Schienenfahrzeugs nach dem vorhergehenden Anspruch 11, wobei das vorab festgelegte Druckregime mit den folgenden Phasen programmiert ist:

a. eine erste Phase, in welcher der Druck mit einer ersten Geschwindigkeit auf einen ersten Druckpegel erhöht wird,
b. eine zweite Phase, in welcher der Druck von dem erste Druckpegel weiter auf einen zweiten Druckpegel erhöht wird, wobei die zweite Phase eine Füllperiode umfasst, wobei der Druck mit einer zweiten Geschwindigkeit erhöht wird, die geringer als die erste Geschwindigkeit ist, und wobei die zweite Phase ferner eine Stabilisierungsperiode umfasst, während der der Druck bei dem zweiten Druckpegel stabilisiert wird,
c. eine dritte Phase, in welcher der Druck mit einer dritten Geschwindigkeit für eine vorab festgelegte Dauer von dem zweiten Druckpegel auf einen dritten Druckpegel gesenkt wird,
d. eine vierte Phase, in welcher die Verbindung zwischen der einen oder den mehreren zentralen Bremsleitungen und einer stationären oder mobilen Drucklufteinheit während einer vorab festgelegten Periode geschlossen ist,
e. eine fünfte Phase, in welcher der Druck von einem vierten Druckpegel am Ende der vierten Phase für eine vorab festgelegte maximale Dauer auf einen fünften Druckpegel gesenkt und für eine variable Dauer konstant gehalten wird,

f. eine sechste Phase, in welcher der Druck mit einer sechsten Geschwindigkeit für eine vorab festgelegte minimale Dauer von dem fünften Druckpegel auf einen sechsten Druckpegel, der niedriger als der erste Druckpegel ist, erhöht wird,

g. eine siebente Phase, in welcher der Druck mit einer siebenten Geschwindigkeit von dem sechsten Druckpegel weiter auf einen siebenten Druckpegel erhöht wird, der vorzugsweise etwa gleich dem ersten Druckpegel ist, wobei der absolute Wert der siebenten Geschwindigkeit kleiner als der absolute Wert der sechsten Geschwindigkeit ist, wobei der Druck vorzugsweise für eine variable Zeitperiode im Wesentlichen bei dem siebenten Druckpegel konstant gehalten wird,

wobei für den Beginn der sechsten Phase eine manuelle Bestätigung durch den Anwender erforderlich ist.

13. Vorrichtung zum Überprüfen eines Bremssystems eines Schienenfahrzeugs nach dem vorhergehenden Anspruch 12, wobei das druckregulierende System dafür eingerichtet ist, eine Dauer der Stabilisierungsperiode der zweiten Phase mittels der folgenden Formel festzulegen:

$$(t_{f1} + t_{f2,fill} - 600s)/2,$$

wobei $t_{f1}$ die Dauer der ersten Phase ist und $t_{f2,fill}$ die Dauer der Füllperiode der zweiten Phase ist und wobei die Dauer der Stabilisierungsperiode der zweiten Phase minimal 30 Sekunden und maximal 120 Sekunden beträgt.

14. Vorrichtung nach einem der vorhergehenden Ansprüche 12 bis 13, wobei das druckregulierende System die fünfte Phase bei einer Differenz zwischen dem dritten Druckpegel und dem tatsächlichen Druckpegel von weniger als 0,05 bar nach etwa 10 Sekunden in der vierten Phase beginnt, wobei bei einer Differenz größer als 0,05 bar die vierte Phase um etwa 50 Sekunden verlängert wird, wonach die neue Druckdifferenz zwischen dem dritten Druckpegel und dem tatsächlichen Druckpegel von dem druckregulierenden System erneut gemessen wird und das druckregulierende System die fünfte Phase bei der neuen Druckdifferenz zwischen dem dritten Druckpegel und dem tatsächlichen Druckpegel von weniger als 0,3 bar beginnt, und wobei der Schritt des Anwendens eines vorab festgelegten Druckregimes zum Überprüfen von dem druckregulierenden System bei der neuen Druckdifferenz zwischen dem dritten Druckpegel und dem aktuellen Druckpegel von mehr als 0,3 bar abgebrochen wird und wobei eine Benachrichtigung darüber ausgegeben wird.

## Revendications

1. Procédé de vérification d'un système de freinage d'un véhicule ferroviaire, dans lequel le véhicule ferroviaire comprend une pluralité de réservoirs de frein pour commander des éléments de freinage sur la base d'une pression interne dans le réservoir de frein, et dans lequel la pression interne dans les réservoirs de frein est commandée par une ou plusieurs conduites de frein centrales, le procédé comprenant les étapes suivantes :

   a. relier les une ou plusieurs conduites de frein centrales à une unité d'air comprimé fixe ou mobile ;
   b. appliquer un régime de pression préprogrammé prédéterminé pour la vérification à partir de l'unité d'air comprimé fixe ou mobile sur les une ou plusieurs conduites de frein centrales, de sorte que le régime suit un cours préprogrammé ;
   c. vérifier que les éléments de freinage du véhicule ferroviaire sont engagés ;
   d. commander les conduites de frein centrales pour obtenir un niveau de pression auquel les réservoirs de frein désengagent les éléments de freinage ;
   e. vérifier que les éléments de freinage du véhicule ferroviaire sont désengagés;

   **caractérisé en ce qu'**un système de régulation de pression est prévu entre les une ou plusieurs conduites de frein centrales et l'unité d'air comprimé fixe ou mobile, dans lequel le système de régulation de pression est conçu pour surveiller la pression de l'unité d'air comprimé fixe ou mobile dans les conduites de frein centrales et pour exercer le régime de pression prédéterminé, et dans lequel les conduites de frein centrales sont commandées par l'intermédiaire du système de régulation de pression pour obtenir le niveau de pression auquel les réservoirs de frein désengagent les éléments de freinage, le cours préprogrammé comprenant au moins les phases suivantes : augmentation rapide de la pression, diminution rapide de la pression, augmentation lente de la pression, diminution lente de la pression, et une phase constante de la pression ; dans lequel le cours préprogrammé du régime de pression comprend les sous-étapes suivantes :

   i. une première sous-étape dans laquelle la pression est augmentée à une première vitesse, à un niveau de pression prédéterminé et/ou pendant une période de temps prédéterminée ;

ii. une deuxième sous-étape dans laquelle la pression est augmentée à une seconde vitesse, à un niveau de pression prédéterminé et/ou pendant une période de temps prédéterminée, moyennant quoi la deuxième vitesse est inférieure à la première vitesse ;

iii. une troisième sous-étape dans laquelle la pression est réduite à une troisième vitesse, à un niveau de pression prédéterminé et/ou pendant une période de temps prédéterminée ;

iv. une quatrième sous-étape dans laquelle la pression est réduite à une quatrième vitesse, à un niveau de pression prédéterminé et/ou pendant une période de temps prédéterminée, moyennant quoi la valeur absolue de la quatrième vitesse est inférieure à la valeur absolue de la troisième vitesse ;

v. une cinquième sous-étape dans laquelle la liaison entre les une ou plusieurs conduites de frein centrales et l'unité d'air comprimé fixe ou mobile est fermée pendant une période de temps prédéterminée ;

moyennant quoi la vérification que les éléments de freinage du véhicule ferroviaire sont engagés est effectuée au cours d'une sous-étape dans laquelle la pression est réduite à partir d'un niveau de pression supérieur au niveau de pression auquel les éléments de freinage se désengagent, à un niveau de pression inférieur au niveau de pression auquel les éléments de freinage se désengagent, de préférence au cours de la sous-étape dans laquelle la pression est réduite à la vitesse avec la valeur absolue la plus élevée.

**2.** Procédé de vérification d'un système de freinage d'un véhicule ferroviaire selon la revendication 1 précédente, dans lequel l'étape consistant à vérifier si les éléments de freinage du véhicule ferroviaire sont engagés et l'étape consistant à vérifier si les éléments de freinage du véhicule ferroviaire sont désengagés sont effectuées sur place.

**3.** Procédé de vérification d'un système de freinage d'un véhicule ferroviaire selon l'une quelconque des revendications précédentes 1 à 2, dans lequel le cours du régime de pression prédéterminé comprend les phases suivantes :

a. une première phase, dans laquelle la pression est augmentée à une première vitesse à un premier niveau de pression ;

b. une deuxième phase, dans laquelle la pression est encore augmentée à partir du premier niveau de pression à un deuxième niveau de pression, la deuxième phase comprenant une période de remplissage dans laquelle la pression est augmentée à une deuxième vitesse inférieure à la première vitesse, et la deuxième phase comprenant en outre une période de stabilisation pendant laquelle la pression est stabilisée au deuxième niveau de pression ;

c. une troisième phase, dans laquelle la pression est réduite à partir du deuxième niveau de pression à un troisième niveau de pression à une troisième vitesse pendant une durée prédéterminée ;

d. une quatrième phase, dans laquelle la liaison entre les une ou plusieurs conduites de frein centrales à une unité d'air comprimé fixe ou mobile est fermée pendant une période prédéterminée ;

e. une cinquième phase dans laquelle la pression est réduite à partir d'un quatrième niveau de pression à la fin de la quatrième phase à un cinquième niveau de pression pendant une durée maximale prédéterminée, et maintenue ensuite constante pendant une durée variable ;

f. une sixième phase dans laquelle la pression est augmentée à partir du cinquième niveau de pression à un sixième niveau de pression, inférieur au premier niveau de pression, à une sixième vitesse pendant une durée minimale prédéterminée ;

g. une septième phase dans laquelle la pression est encore augmentée partir du sixième niveau de pression à un septième niveau de pression, de préférence sensiblement égal au premier niveau de pression, à une septième vitesse, la septième vitesse étant inférieure en valeur absolue à la sixième vitesse en termes de valeur absolue ;

dans lequel la vérification que les éléments de freinage du véhicule ferroviaire sont engagés est réalisée au cours de la cinquième étape, et dans lequel la commande des conduites de frein centrales pour obtenir le niveau de pression auquel les réservoirs de frein désengagent les éléments de freinage démarre la sixième phase et la septième phase, après quoi la pression est de préférence maintenue sensiblement constante au niveau de pression auquel les éléments de freinage sont désengagés.

**4.** Procédé de vérification d'un système de freinage d'un véhicule ferroviaire selon la revendication précédente 3, dans lequel la période de stabilisation de la deuxième phase a une durée de $(t_{f1} + t_{f2,fill} - 600s)/2$, où $t_{f1}$ est la durée de la première phase, et $t_{f2,fill}$ est la durée de la période de remplissage de la deuxième phase, et dans lequel la durée de la période de stabilisation de la deuxième phase est d'au moins 30 secondes et est au maximum de 120 secondes.

**5.** Procédé de vérification d'un système de freinage d'un véhicule ferroviaire selon l'une quelconque des revendications précédentes 3 ou 4, dans lequel la cinquième phase démarre à une différence entre le troisième niveau de pression et le niveau de pression réel inférieure à 0,05 bar au bout d'environ 10 secondes dans la quatrième phase, dans lequel si la différence est supérieure à 0,05 bar, la quatrième phase est prolongée d'environ 50 secondes, après quoi la nouvelle différence de pression entre le troisième niveau de pression et le niveau de pression réel est à nouveau mesurée et la cinquième phase démarre à la nouvelle différence de pression entre le troisième niveau de pression et le niveau de pression réel inférieure à 0,3 bar, et où l'étape d'application d'un régime de pression prédéterminé pour la vérification est interrompue à la nouvelle différence de pression entre le troisième niveau de pression et le niveau de pression réel supérieure à 0,3 bar et une notification de celle-ci est affichée.

6. Procédé de vérification d'un système de freinage d'un véhicule ferroviaire selon l'une quelconque des revendications précédentes 3 à 5, dans lequel une confirmation manuelle que le cinquième niveau de pression est atteint avant la fin de la durée maximale prédéterminée est nécessaire pour démarrer la sixième phase, de préférence avec la pression interne maintenue au cinquième niveau de pression jusqu'à ce que la confirmation manuelle soit reçue.

7. Procédé de vérification d'un système de freinage d'un véhicule ferroviaire selon l'une quelconque des revendications précédentes 3 à 6, dans lequel les éléments de freinage sont engagés en dessous d'une pression interne déterminée dans les réservoirs de frein et désengagés au-dessus de la pression interne déterminée dans les réservoirs de frein, le premier niveau de pression étant approximativement égal à la pression interne déterminée, et de préférence dans lequel la pression interne déterminée est d'environ 5,0 bar par rapport à la pression atmosphérique.

8. Procédé de vérification d'un système de freinage d'un véhicule ferroviaire selon l'une quelconque des revendications précédentes 1 à 7, dans lequel le système de régulation de pression est commandé à distance par un utilisateur, de préférence par l'intermédiaire d'un dispositif électronique portable.

9. Procédé de vérification d'un système de freinage d'un véhicule ferroviaire selon l'une quelconque des revendications précédentes 1 à 8, dans lequel le système de régulation de pression est conçu pour enregistrer la vérification du système de freinage dans une base de données centralisée.

10. Procédé de vérification d'un système de freinage d'un véhicule ferroviaire selon l'une quelconque des revendications précédentes 1 à 9, dans lequel l'application d'un régime de pression prédéterminé pour la vérification est automatisée.

11. Dispositif de vérification d'un système de freinage d'un véhicule ferroviaire, dans lequel le véhicule ferroviaire comprend une pluralité de réservoirs de frein pour commander des éléments de freinage sur la base d'une pression interne dans le réservoir de frein, et dans lequel la pression interne dans les réservoirs de frein est commandée par une ou plusieurs conduites de frein centrales, le dispositif comprenant un système de régulation de pression, conçu pour relier une unité d'air comprimé fixe ou mobile à une ou plusieurs conduites de frein centrales et réguler la pression fournie aux une ou plusieurs conduites de frein centrales, dans lequel le système de régulation de pression est conçu pour l'application automatisée d'un régime de pression prédéterminé et préprogrammé pour la vérification à partir de l'unité d'air comprimé fixe ou mobile sur les une ou plusieurs conduites de frein centrales, dans lequel le régime suit un cours préprogrammé, dans lequel le cours préprogrammé comprend au moins les phases suivantes : augmentation rapide de la pression, diminution rapide de la pression, augmentation lente de la pression, diminution lente de la pression, et une phase constante de la pression ; de préférence dans lequel le système de régulation de pression peut être commandé à distance par un utilisateur, de préférence en outre par l'intermédiaire d'un dispositif électronique portable, dans lequel le cours préprogrammé du régime de pression comprend les sous-étapes suivantes :

i. une première sous-étape dans laquelle la pression est augmentée à une première vitesse, à un niveau de pression prédéterminé et/ou pendant une période de temps prédéterminée ;

ii. une deuxième sous-étape dans laquelle la pression est augmentée à une seconde vitesse, à un niveau de pression prédéterminé et/ou pendant une période de temps prédéterminée, moyennant quoi la deuxième vitesse est inférieure à la première vitesse ;

iii. une troisième sous-étape dans laquelle la pression est réduite à une troisième vitesse, à un niveau de pression prédéterminé et/ou pendant une période de temps prédéterminée ;

iv. une quatrième sous-étape dans laquelle la pression est réduite à une quatrième vitesse, à un niveau de pression prédéterminé et/ou pendant une période de temps prédéterminée, moyennant quoi la valeur absolue de la quatrième vitesse est inférieure à la valeur absolue de la troisième vitesse ;

v. une cinquième sous-étape dans laquelle la liaison entre les une ou plusieurs conduites de frein centrales et l'unité d'air comprimé fixe ou mobile est fermée pendant une période de temps prédéterminée ;

moyennant quoi la vérification que les éléments de freinage du véhicule ferroviaire sont engagés est effectuée au cours d'une sous-étape dans laquelle la pression est réduite à partir d'un niveau de pression supérieur au niveau de pression auquel les éléments de freinage se désengagent, à un niveau de pression inférieur au niveau de pression auquel les éléments de freinage se désengagent, de préférence au cours de la sous-étape dans laquelle la pression est réduite à la vitesse avec la valeur absolue la plus élevée.

12. Dispositif de vérification d'un système de freinage d'un véhicule ferroviaire selon la revendication 11 précédente, dans lequel le régime de pression prédéterminé est programmé avec les phases suivantes :

a. une première phase, dans laquelle la pression est augmentée à une première vitesse à un premier niveau de pression ;
b. une deuxième phase, dans laquelle la pression est encore augmentée à partir du premier niveau de pression à un deuxième niveau de pression, la deuxième phase comprenant une période de remplissage dans laquelle la pression est augmentée à une deuxième vitesse inférieure à la première vitesse, et la deuxième phase comprenant en outre une période de stabilisation pendant laquelle la pression est stabilisée au deuxième niveau de pression ;
c. une troisième phase, dans laquelle la pression est réduite à partir du deuxième niveau de pression à un troisième niveau de pression à une troisième vitesse pendant une durée prédéterminée ;
d. une quatrième phase, dans laquelle la liaison entre les une ou plusieurs conduites de frein centrales à une unité d'air comprimé fixe ou mobile est fermée pendant une période prédéterminée ;
e. une cinquième phase dans laquelle la pression est réduite à partir d'un quatrième niveau de pression à la fin de la quatrième phase à un cinquième niveau de pression pendant une durée maximale prédéterminée, et maintenue ensuite constante pendant une durée variable ;
f. une sixième phase dans laquelle la pression est augmentée à partir du cinquième niveau de pression à un sixième niveau de pression, inférieur au premier niveau de pression, à une sixième vitesse pendant une durée minimale prédéterminée ;
g. une septième phase dans laquelle la pression est encore augmentée partir du sixième niveau de pression à un septième niveau de pression, de préférence à sensiblement égal au premier niveau de pression, à une septième vitesse, la septième vitesse étant inférieure en valeur absolue à la sixième vitesse en termes de valeur absolue, de préférence dans lequel la pression est maintenue sensiblement constante au septième niveau de pression pendant une période de temps variable ;

nécessitant une confirmation manuelle de l'utilisateur pour le démarrage de la sixième phase.

13. Dispositif de vérification d'un système de freinage d'un véhicule ferroviaire selon la revendication précédente 12, dans lequel le système de régulation de pression est conçu pour déterminer une durée de la période de stabilisation de la deuxième phase au moyen de la formule suivante :

$$(t_{f1} + t_{f2,fill} - 600s)/2 ;$$

où $t_{f1}$ est la durée de la première phase, et $t_{f2,fill}$ est la durée de la période de remplissage de la deuxième phase, et dans lequel la durée de la période de stabilisation de la deuxième phase est d'au moins 30 secondes et est au maximum de 120 secondes.

14. Dispositif selon l'une quelconque des revendications précédentes 12 à 13, dans lequel le système de régulation de pression démarre la cinquième phase à une différence entre le troisième niveau de pression et le niveau de pression réel inférieure à 0,05 bar au bout de 10 secondes environ dans la quatrième phase, dans lequel à une différence supérieure à 0,05 bar, la quatrième phase est allongée d'environ 50 secondes, après quoi la nouvelle différence de pression entre le troisième niveau de pression et le niveau de pression réel est à nouveau mesurée par le système de régulation de pression et le système de régulation de pression démarre la cinquième phase à la nouvelle différence de pression entre le troisième niveau de pression et le niveau de pression réel inférieure à 0,3 bar, et dans lequel l'étape consistant à appliquer un régime de pression prédéterminé pour la vérification est interrompue par le système de régulation de pression à la nouvelle différence de pression entre le troisième niveau de pression et le niveau de pression réel supérieure à 0,3 bar, et dans lequel une notification de celle-ci est donnée.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4847770 A

- EP 2805859 A